# EUROPEAN PATENT SPECIFICATION

(11) **EP 0 926 873 B1**
(45) Date of publication and mention of the grant of the patent: **06.07.2005**
(21) Application number: 98309986.2
(22) Date of filing: 04.12.1998
(51) Int. Cl.: H04M 11/00

(54) **Control of telemetry interface gateway during a voice call**
Steuerung einer Telemetrieschnittstellenbrücke während eines Sprachanrufes
Commande d'une passerelle d'interface de télémétrie pendant un appel vocal

(30) Priority: 19.12.1997 US 994232; 19.12.1997 US 994245
(43) Date of publication of application: 30.06.1999
(73) Proprietor: LUCENT TECHNOLOGIES INC., Murray Hill, New Jersey 07974-0636 (US)
(72) Inventor: Garland, Stuart Mandel, Morton Grove, Illinois 60053 (US); Smith, David B., Hinsdale, Illinois 60521 (US)
(74) Representative: Sarup, David Alexander

(56) References cited:
- EP-A- 0 188 865
- WO-A-92/12590
- WO-A-94/27396
- GB-A- 2 166 625
- US-A- 3 617 639
- US-A- 5 369 691

## Description

This invention relates to methods of communicating between an agent position of a service company and customer premises equipment, and to telemetering interface gateways for communicating with an agent position.

Standard arrangements now exist for allowing a utility to access metering equipment or to control units such as air conditioning units over the telephone connection to a customer. The present arrangements have the disadvantage that they can only be used when the line is not busy, i.e., is not engaged in a communication unless expensive integrated data/voice modems are installed at both ends of the connection or, undesirably, when "barge-in" is invoked. Frequently, however, when a customer calls a utility, the customer's problems can be resolved by accessing the customer's metering equipment from the utility. For example, if the customer complains that his bill was much too high the previous month, the utility can access the electric meter to determine its present reading and thereby check to see if the bill was based on an erroneous reading, or download stored maintenance data. In other applications, a service bureau can perform diagnostic tests on customer appliances. The problem of the prior art is that there are no low cost arrangements for allowing the utility or service bureau to access the customer's telemetering equipment without requiring the customer to first hang up and then be re-called after the automated reading has been executed, or to send someone to the customer's location to manually read the meter. In view of the high cost of handling customer communications, the inability to solve the problem immediately by accessing the metering equipment while a customer is still connected to a service representative is costly and is not really acceptable customer service. (For clarity, the term "utility" as used hereinafter includes a service bureau).

US-A-5,369,691 discloses arrangements for an interface between a telephone instrument and meter reading devices. Signals representing the meter readings are sent as out of band signals over the telephone line so that these signals do not interfere with the use of the telephone.

GB-A-2,166,625 discloses arrangements for connecting telemetry devices to customer premises equipment through a system which bypasses the existing central office switch. Multiplexing is used to transmit signals for a plurality of lines. The data is transmitted outside the voice band to enable simultaneous voice and data transmission to a customer.

EP-A-0 188 865 discloses arrangements for a combined telephone facsimile station. The station can accept facsimile messages when the station is initially on hook (the usual mode of operation of facsimile messages) or can be switched by a user in the middle of a conversation from a voice mode to a facsimile mode. The switch from the voice mode to the facsimile mode is made by the user of the receiving facsimile station.

According to one aspect of this invention there is provided a method as claimed in claim 1.

According to another aspect of this invention there is provided a Telemetering Interface Gateway as claimed in claim 4.

An alert signal is sent to activate a telemetering interface gateway (TIG) unit at the customer's premises while the line is in the off-hook state, (e.g., during an active voice call), or prior to establishing a voice connection. Advantageously, this then permits the meter equipment at the customer's premises to be accessed while the customer is in the off-hook state, and while talking to the customer. Specific called directory numbers can be programmed for dedicated communication to either meters or control devices. In accordance with one preferred embodiment, a security dialogue takes place between the utility equipment and the telemetering interface to ensure that the utility is accessing the correct customer premises equipment and that the customer has the correct equipment. The switch can provide a security function by filtering return data to assure that only information that is authorized is sent to the utility. This dialogue can be in accordance with the prior art. After the measurement/control dialogue has been completed, the telemetering interface unit is deactivated and the customer is re-connected to the service representative of the utility.

The computer which records the information obtained from the customer premises equipment causes the information to be displayed at the agent's position. If necessary and in order to take additional measurements or perform additional control actions, the agent causes another alert signal to be sent to activate the telemetering interface unit. In order to access the customer's premises equipment while the customer is still in the off-hook state and further dialogue between the customer and the agent can then take place. In accordance with one preferred embodiment, the incoming call is recognized at an automatic call distributor to the agents and the automatic call distributor causes the initial set of measurements to be performed; optionally, an announcement such as "We are testing your equipment" can be returned. In an alternative arrangement, a switch of the public switched telephone network recognizes the telephone number, and causes the measurement connection to be established; an announcement would serve to warn the customer about the unusually long dead time on the connection. A third alternative is to have customer premises equipment for recognizing the telephone number and automatically initiating the measurement connection through signals to the automatic call distributor.

Advantageously, using this arrangement a utility agent can talk to a customer about a problem with prior knowledge of the measurements most likely to be important for solving the problem, and if necessary can obtain additional measurements all within a single call.

In accordance with one preferred embodiment of Applicants' invention the same alerting tone is used for off-hook alerting as for the conventional on-hook alerting. Advantageously, this simplifies the design of the telemetering interface Gateway (TIG) unit which normally uses on-hook alerting for taking readings and for controlling devices.

In accordance with Applicants' preferred embodiment, when the utility agent switches from the conversational mode to the measurement and testing mode and causes the TIG alert signal to be sent, the customer's telephone may be partially or completely muted to avoid confusing or annoying the customer with loud tones required for the telemetering and testing functions. In accordance with a feature of this preferred embodiment, a lamp is lit on the customer telephone in order to assure the customer that he/she is still connected and that tests are being conducted and that the connection is not simply gone open or muted.

Advantageously, using this arrangement, a utility agent who is talking to a customer about a problem, can immediately cause a connection to the customer's telemetering equipment to be established, can perform any tests or measurements accessible via this telemetering connection and can then discuss any results with the customer, all without requiring a separate connection or a separate call back.

This arrangement can also be used to send a fax message, via a fax connected to the TIG, without disconnecting a call and while permitting an initial call to be continued after the fax has been transmitted.

### Brief Description of the Drawing:

FIG. 1 is a block diagram illustrating Applicants' invention; and
FIGs. 2 and 3 are flow diagrams for alternative methods of utilizing Applicants' apparatus.

### Detailed Description:

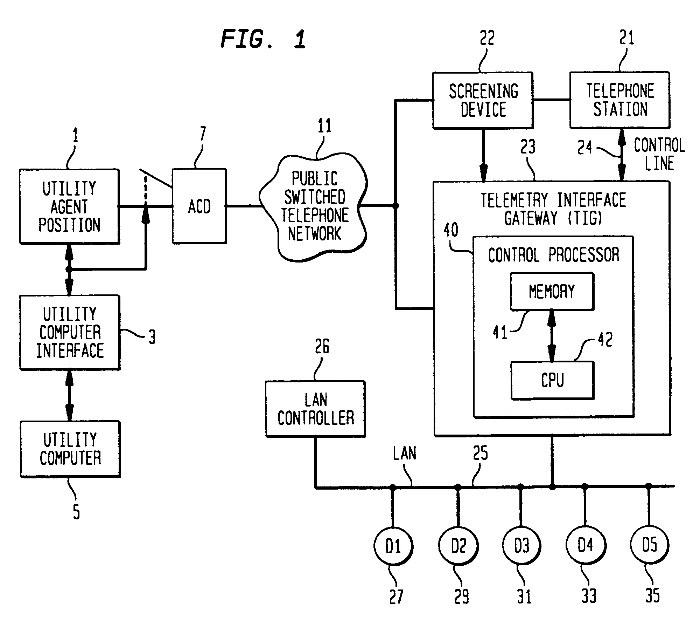

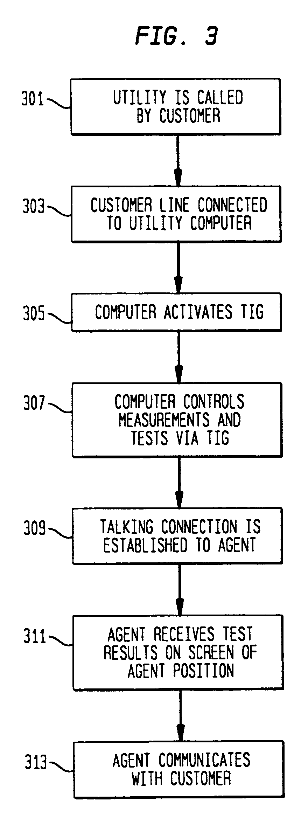

Fig. 1 is a block diagram illustrating the operation of Applicants' invention. A group of utility agent positions are connected to the public switched telephone network 11 through an automatic call distributor 7. A utility agent staffs a utility agent position 1 which contains a telephone and a keyboard for data entry and monitor for the display of data. The utility agent position is connected to a utility computer interface 3 which allows a plurality of utility agent positions to interface with a single utility computer 5. The utility computer interface sends data to and receives data from the utility agent position and passes such data from or to the utility computer. In addition, the utility computer interface receives instructions from the utility computer to transmit alert signals and telemetering control signals to the called customer device. Caller identification signals can be used as part of the verification process. The utility agent position 1 is connected via the public switched telephone network to the telephone station 21 of a customer. If the customer originates the call, a screening device 22 can detect whether the call is to a utility or service bureau, and if so, notify the TIG to initiate actions leading to initial tests prior to establishing a voice connection to an agent. (See Fig. 3). When, as a result of the conversation, the utility agent decides that tests should be applied or meters read, the utility agent causes a request to the utility computer to be generated and the utility computer causes an alerting signal to be sent out by the utility computer interface 3, which should, preferably, cause the customer's telephone talk/receive path to be muted. In this case, since the called station 21 is off-hook, the telemetry interface unit recognizes the alerting signal while the line to the telephone station is in the off-hook state. The telemetry interface unit 23 receives the alerting signal and responds to the alerting signal by participating in a security dialogue as required. This security dialogue is essentially the same security dialogue that is used for the normal on-hook Telemetry Interface Gateway (TIG) Unit connection, in that the utility verifies whom it is talking with, that the customer has the correct equipment, and the TIG verifies the authority of the utility. Note that all TIGs are initially on-hook receiving the alert tone and subaddress. As a result of receiving the alert tone and subaddress, the TIG may become an on-hook transmitting device or an off-hook transmitting device. The utility informs the switch of the off-hook or on-hook state since the switch responds differently to the two types of devices. In an alternative arrangement, the TIG becomes active after the security dialogue. After the security dialogue has been successfully completed, the utility computer responds to requests keyed in by the utility agent at the utility agent position by causing the utility computer interface 3 to generate the control signals required to perform the tests and read the meters that the utility agent has requested; the agent can specify a pre-programmed set of tests or specific tests. The Telemetry Interface Gateway (TIG) unit receives these control signals and responds to them by querying the meters and performing the appropriate tests. The Telemetry Interface Gateway (TIG) unit then transmits back to the utility computer interface 3, the signals representing the results of the meter readings and tests. These signals are interpreted by the utility computer 5 which generates data for display at the utility agent position and records the data in the utility computer for rebilling and other future purposes. The computer can suggest alternative actions to the agent.

The utility agent position can generate additional requests for meter readings and data based on the results of the earlier tests and meter readings. When the utility agent is satisfied with the results of the tests or feels that no further tests are likely to be useful, the utility agent requests a disconnection of the Telemetry Interface Gateway (TIG) unit and a reconnection of the voice connection to the telephone station 21, and the light goes out. Alternatively, the utility agent can then discuss the results of these tests with the customer at telephone station 21. The utility computer causes a signal to be sent to the Telemetry Interface Gateway (TIG) unit to disconnect the Telemetry Interface Gateway (TIG) unit connection and to reestablish the full connection (without muting) of the telephone station. In both cases, the TIG sends a signal back to the utility indicating its idle state, or simply removes a carrier signal. In contrast to a normal TIG connection, the TIG does not send a full connection disconnect back to the switch after the read/test cycle has been completed; instead a voice connection remains and, if previously muted, is restored to normal.

During the time that the Telemetry Interface Gateway, (TIG), unit is in the active state, the telephone station can be partially or completely muted via control line 24 or special muting tone from the utility so that the customer does not hear loud data signals and does not generate speech signals which might interfere with the data signals. Control line 24 can either send tone to station 21 or activate an electrical circuit. If tone is sent from the utility or the TIG, a regular line can be used. Complete muting can be accomplished by simply disconnecting the handset; partial muting (which has the advantage of letting the customer hear tones indicating that something is going on) can be accomplished by shunting the microphone and earphone of the handset, or by inserting impedance in series with these devices. Alternatively, the customer can simply be warned about the presence of signals on the line and be asked to refrain from speaking until the agent speaks. A lamp at the customer's station can indicate that the TIG is communicating with the utility. The latter arrangement has the advantage of being supported by existing telephone stations.

Fig. 1 shows the Telemetry Interface Gateway (TIG) unit connected to a small local area network 25 controlled by a local area network controller 26. Local area network is connected to devices D1 (27), D2 (29), D3 (31), D4 (33), and D5 (35). These devices are interfaces to meters or to the controls of units such as air conditioning units, furnaces, or other devices. If only a single meter is being telemetered by TIG 23 a more direct connection between the TIG and the device can be used.

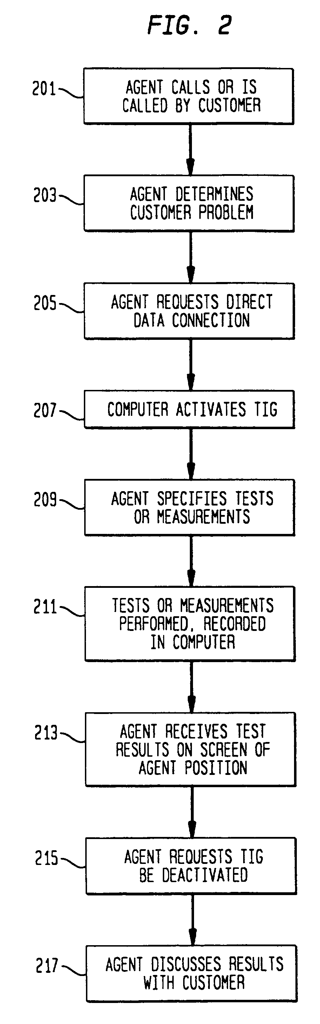

Fig. 2 is a flow diagram illustrating an operation example, which does not form part of the applicants' invention. A utility agent is called by a customer having a telemetering interface unit or the agent has reason to believe that there is a problem and calls the customer (Action Block 201). The agent discusses the problem with the customer in sufficient depth so that the agent can make a decision as to what types of tests and meter readings are to be performed (Action Block 203). The agent then requests a direct data connection to the customer's TIG (Action Block 205). This request is entered by the agent by typing an appropriate command on the keyboard of the agent position. Data entered on this keyboard is sent to the utility computer. The utility computer responds to this request by activating the customer's TIG (Action Block 207). The activation is performed by sending an alert signal after which, in conformance with present practice in the industry, a security dialogue takes place between the computer and the TIG. If the security dialogue successfully establishes that the correct unit is being accessed by a computer having the right to access that TIG, and the TIG accepts the accessing computer, then the TIG has been activated. The agent specifies the tests or measurements that are wanted by typing further commands into the agent position (Action Block 209). In response to these requests from the agent, the utility computer causes data signals to be transmitted to the TIG to request the tests or measurements, and the TIG responds with the results of these tests or measurements by sending data signals back. The data is transmitted using analog transmission, e.g., frequency shift keying. The returned data signals are recorded and interpreted by the computer and are then used to control a display of the test data at the utility agent position. The agent examines these results, which may include alternative actions suggested by the computer, and if necessary, possibly on the basis of alternatives suggested by the computer, specifies additional tests or measurements or actions at the utility computer (rebilling, etc.) (repeat of Action Blocks 209 and 211 which are then performed). The agent receives test results and any other data on a screen (Action Block 213). Eventually, the agent recognizes that no further tests or measurements are needed or are useful, and the agent requests that the TIG be deactivated (Action Block 215). The computer responds to this request by causing a deactivation signal to be sent to the TIG and the TIG, upon receiving that deactivation signal, re-establishes the normal connection between the customer telephone station and the agent position by removing any muting, turning off the telemetering lamp, and deactivating itself. Typically, the deactivation signal can be an 800 millisecond open loop signal to disconnect a modem carrier, or a deactivation message to the TIG. Subsequently, the agent discusses the results with the customer (Action Block 217) and, if the result of the tests and measurements indicate a real problem, will cause a maintenance craftsperson to be dispatched to the customer's premises.

Fig. 3 illustrates the sequence of steps for an arrangement wherein the agent receives information about the latest customer status prior to talking to the customer. When the customer dials a number (Action Block 301) associated with the service department or billing department of a service provider, if the customer has a TIG for accessing metering and/or control equipment associated with the service provider, then an initial connection is established between a control computer or equivalent system of the service provider and the TIG of the customer (Action Block 303). The service provider equipment then activates the TIG (Action Block 305) and communicates with the TIG (Action Block 307) in order to obtain measurements from metering equipment connected to the TIG. The results of these measurements are stored and are provided to the agent (Action Block 311) that is subsequently connected to the calling customer (Action Block 309). The agent can then talk to the customer (Action Block 313). The arrangements of Fig. 2 can subsequently be re-invoked in case the agent needs additional measurements not automatically taken at the time the call is initially established. All of this is done within a single call, which saves time and which insures that a single agent handles the entire transaction.

The above is one illustrative embodiment of Applicants' invention. Many other embodiments will be apparent to those of ordinary skill in the art without departing from the scope of the invention. The invention is limited only by the attached claims.

## Claims

1. A method of communicating between an agent position (1) of a service provider and customer premises equipment comprising a Telemetering Interface Gateway (23), TIG, a screening device (22) and a telephone station (21) connected to the customer's telephone line, the method comprising the steps of:
the customer dialing a number (301) associated with said agent position;
determining at said screening device whether the call request is for a connection to said agent position;
responsive to determining that the call request is for a connection to said agent position, the screening device notifying said TIG to initiate actions for testing units (27, 29, 31, 33, 35) connected to said TIG;
establishing (303) a voice band connection over the Public Switched Telephone Network (11) between a control computer (5) at the service provider and said TIG;
said control computer activating (305) the TIG;
sending (307) voice band signals from said TIG to said agent position for reporting results of such testing; and
responsive to a voice band signal from said agent position received in said TIG, deactivating said TIG and connecting (313) said telephone station to said voice band connection.

2. A method as claimed in claim 1, wherein, in response to activating said TIG, said TIG sending signals to said control computer for initiating a dialogue between said control computer and said TIG.

3. A method as claimed in claim 1, wherein the step of activating said TIG comprises the step of:
sending control signals from said control computer to said TIG for controlling operations of said TIG.

4. A Telemetering Interface Gateway (23), TIG, for communicating with an agent position, comprising:
a control processor (40);
said control processor comprising memory (41) and a control processing unit (42);
said memory being for storing a program for controlling said control processor,
said control processor responsive to signals to connect or to disconnect or mute a telephone station of said customer so that either a voice connection or a data connection can be established over said telephone line;
said TIG adapted to be attached to a screening device (22) for determining whether an attached telephone station (21) has dialed a telephone number of an agent position (1) of a service provider;
said TIG adapted to be responsive to a signal from said screening device that said telephone station has dialed a telephone number of an agent position and adapted to initiate testing of units (27, 29, 31, 33, 35) connected to said TIG, and to establish (303) a voice band connection over a Public Switched Telephone Network (11) between a control computer (5) of said agent position and said TIG;
said TIG adapted to be activated (305) by signals from said control computer,
said TIG adapted to send (307) voice band signals to said agent position for reporting results of said testing;
said TIG, adapted to be responsive to a voice band signal from said agent position for deactivating said TIG and connecting (313) said telephone station to said agent position.

## Patentansprüche

1. Verfahren zum Kommunizieren zwischen einer Agentenstelle (1) eines Diensteanbieters und einer Teilnehmereinrichtung mit einer Telemetrieschnittstellenbrücke (23) (TIG - Telemetering Interface Gateway), einer Vorabfragevorrichtung (22) und einer mit dem Telefonanschluß des Kunden verbundenen Sprechstelle (21), mit folgenden Schritten:
Wählen einer der Agentenstelle zugeordneten Nummer (301) durch den Kunden;
Bestimmen an der Vorabfragevorrichtung, ob die Rufanforderung für eine Verbindung zu der Agentenstelle bestimmt ist;
als Reaktion auf die Bestimmung, daß die Rufanforderung für eine Verbindung zu der Agentenstelle bestimmt ist, Benachrichtigen der TIG durch die Vorabfragevorrichtung, Handlungen zum Prüfen von mit der TIG verbundenen Einheiten (27, 29, 31, 33, 35) einzuleiten;
Herstellen (303) einer Sprachbandverbindung über das öffentliche Wählnetz (11) zwischen einem Prozeßrechner (5) am Diensteanbieter und der TIG; wobei der Prozeßrechner die TIG aktiviert (305); Senden (307) von Sprachbandsignalen von der TIG zur Agentenstelle zum Melden von Ergebnissen dieser Prüfung; und
als Reaktion auf ein in der TIG empfangenes Sprachbandsignal von der Agentenstelle Deaktivieren der TIG und Verbinden (313) der Sprechstelle mit der Sprachbandverbindung.

2. Verfahren nach Anspruch 1, wobei als Reaktion auf das Aktivieren der TIG die TIG Signale zum Prozeßrechner zum Einleiten eines Dialogs zwischen dem Prozeßrechner und dem TIG sendet.

3. Verfahren nach Anspruch 1, wobei der Schritt des Aktivierens der TIG den Schritt des Sendens von Steuerungssignalen vom Prozeßrechner zur TIG zum Steuern von Operationen der TIG umfaßt.

4. Telemetrieschnittstellenbrücke (23) TIG (Telemetering Interface Gateway) zum Kommunizieren mit einer Agentenstelle, mit folgendem:
einem Prozeßrechner (40);
wobei der Prozeßrechner Speicher (41) und eine Steuerungsverarbeitungseinheit (42) umfaßt;
wobei der Speicher zum Speichern eines Programms zum Steuern des Prozeßrechners bestimmt ist;
wobei der Prozeßrechner auf Signale zum Verbinden oder Abtrennen oder Stummschalten einer Sprechstelle des Kundens reagiert, so daß entweder eine Sprachverbindung oder eine Datenverbindung über den Telefonanschluß hergestellt werden kann;
wobei die TIG an eine Vorabfragevorrichtung (22) zum Bestimmen, ob eine angeschaltete Sprechstelle (21) eine Telefonnummer einer Agentenstelle (1) eines Diensteanbieters gewählt hat, angeschaltet werden kann;
wobei die TIG als Reaktion auf ein Signal von der Vorabfragevorrichtung, daß die Sprechstelle eine Telefonnummer einer Agentenstelle gewählt hat, reagieren kann und die Prüfung von mit der TIG verbundenen Einheiten (27, 29, 31, 33, 35) einleiten kann und eine Sprachbandverbindung über ein öffentliches Wählnetz (11) zwischen einem Prozeßrechner (5) der Agentenstelle und der TIG herstellen kann (303);
wobei die TIG durch Signale von dem Prozeßrechner aktiviert werden kann (305),
wobei die TIG Sprachbandsignale zur Agentenstelle zum Melden der Ergebnisse der Prüfung senden kann (307);
wobei die TIG auf ein Sprachbandsignal von der Agentenstelle zum Deaktivieren der TIG und Verbinden (313) der Sprechstelle mit der Agentenstelle reagieren kann.

## Revendications

1. Procédé de communication entre une position d'agent (1) d'un fournisseur de services et un équipement d'abonné comprenant une Passerelle d'Interface de Télémesure (23), TIG, un dispositif de filtrage (22) et une station téléphonique (21) connectés à la ligne téléphonique de l'abonné, le procédé comprenant les étapes de :
composition par l'abonné d'un numéro (301) associé à ladite position d'agent ;
détermination au niveau dudit dispositif de filtrage si la demande d'appel porte sur une connexion avec ladite position d'agent ;
en réponse à la détermination que la demande d'appel porte sur une connexion avec ladite position d'agent, notification de la TIG par le dispositif de filtrage pour lancer des actions de tests d'unités (27, 29, 31, 33, 35) connectées à ladite TIG ;
établissement (303) d'une connexion en bande vocale sur le Réseau téléphonique commuté public (11) entre un ordinateur de commande (5) au niveau du fournisseur de services et ladite TIG ;
activation (305) de la TIG par ledit ordinateur de commande ;
envoi (307) de signaux en bande vocale depuis ladite TIG jusqu'à ladite position d'agent pour rendre compte des résultats de ces tests ; et
en réponse à un signal en bande vocale depuis ladite position d'agent reçu dans ladite TIG, désactivation de ladite TIG et connexion (313) de ladite station téléphonique à ladite connexion en bande vocale.

2. Procédé selon la revendication 1, dans lequel, en réponse à l'activation de ladite TIG, ladite TIG envoie des signaux audit ordinateur de commande pour lancer un dialogue entre ledit ordinateur de commande et ladite TIG.

3. Procédé selon la revendication 1, dans lequel l'étape d'activation de ladite TIG comprend l'étape :
d'envoi de signaux de commande depuis ledit ordinateur de commande jusqu'à ladite TIG pour commander les opérations de ladite TIG.

4. Passerelle d'Interface de Télémesure (23), TIG, pour communiquer avec une position d'agent, comprenant :
un ordinateur de commande (40) ;
ledit ordinateur de commande comprenant une mémoire (41) et une unité de traitement de commande (42) ;
ladite mémoire servant à mémoriser un programme pour commander ledit processeur de commande ;
ledit processeur de commande étant sensible aux signaux afin de connecter ou de déconnecter ou mettre sous silence une station téléphonique dudit abonné de telle sorte que soit une connexion vocale, soit une connexion de données puisse être établi sur ladite ligne téléphonique ;
ladite TIG étant adaptée en vue d'être reliée à un dispositif de filtrage (22) pour déterminer si une station téléphonique reliée (21) a composé un numéro de téléphone d'une position d'agent (1) d'un fournisseur de services ;
ladite TIG étant adaptée en vue de répondre à un signal provenant dudit dispositif de filtrage indiquant que ladite station téléphonique a composé un numéro de téléphone d'une position d'agent et adaptée en vue de lancer des tests d'unités (27, 29, 31, 33, 35) connectées à la TIG, et en vue d'établir (303) une connexion en bande vocale sur un Réseau téléphonique commuté public (11) entre un ordinateur de commande (5) de ladite position d'agent et ladite TIG ;
ladite TIG étant adaptée en vue d'être activée (305) par des signaux provenant dudit ordinateur de commande ;
ladite TIG étant adaptée en vue d'envoyer (307) des signaux en bande vocale à ladite position d'agent pour rendre compte des résultats desdits tests ;
ladite TIG étant adaptée en vue de répondre à un signal en bande vocale provenant de ladite position d'agent pour désactiver ladite TIG et connecter (313) ladite station téléphonique à ladite position d'agent.
